# EUROPÄISCHE PATENTSCHRIFT

(11) **EP 0 335 207 B1**
(45) Veröffentlichungstag und Bekanntmachung des Hinweises auf die Patenterteilung: **02.02.1994**
(21) Anmeldenummer: 89104855.5
(22) Anmeldetag: 17.03.1989
(51) Int. Cl.: A45D 19/06, A45D 44/02

(54) **Haltevorrichtung für Friseurgeräte mit Feststellbremse**
Supporting device with a blocking brake for hair-dresser apparatus
Dispositif de support avec frein de blocage pour appareil de coiffeur

(30) Priorität: 28.03.1988 DE 8804183 U
(43) Veröffentlichungstag der Anmeldung: 04.10.1989
(73) Patentinhaber: R.+L. THOMAS GmbH & Co. KG, D-45257 Essen (DE)
(72) Erfinder: Nix, Horst, D-8011 Vaterstetten (DE)
(74) Vertreter: Schütz, Peter, Dipl.-Ing.

(56) Entgegenhaltungen:
- DE-A- 2 109 751
- DE-C- 837 792

## Beschreibung

Die Erfindung betrifft eine Haltevorrichtung für Friseurgeräte mit den im Oberbegriff des Anspruchs 1 angegebenen Merkmalen.

Außer den fest eingebauten Waschbecken werden in Friseursalons häufig von schwenkbaren Gestellen, die am Boden befestigt sind, getragene Haarwaschbecken benutzt, die sich zum Stuhl des Kunden heranziehen und nach Gebrauch wieder wegschwenken lassen. Die Schwenkgestelle enthalten ein Grundparallelogramm, das am Boden drehbar gelagert ist und sowohl eine Schwenkbewegung zum Heranziehen und Wegschieben des Beckens als auch eine Drehbewegung erlaubt, die eine Benutzung des Waschbeckens an zwei benachbarten Stühlen möglich macht. Das Becken selbst ist mit diesem Grundparallelogramm über ein Ansatzparallelogramm verbunden, in dem es seinerseits seitlich verdreht werden kann. Beim Haarewaschen liegt der Kunde mit seinem Hals in einem Ausschnitt des Beckens, das auf diese Weise gegen ein Wegdrehen fixiert wird. Um ein seitliches Ausweichen des Beckens durch Verdrehen des Grundparallelogramms in seinem Lagerfuß zu verhindern, wird eine Verdrehsicherung in Form einer Feststellbremse vorgesehen, die bei einer bekannten Haltevorrichtung derselben Anmelderin als Seilzugbremse ausgebildet war.

Aus der DE-OS 21 09 751 ist eine ähnliche Parallelogrammhalterung für ein Kopfwaschbecken bekannt, bei welcher zur Arretierung der Waschanlage gegen Drehbewegungen eine Feststelleinrichtung mit einem Arretierhebel vorgesehen ist, mit Hilfe dessen über ein weiteres Parallelogramm eine am Drehfuß vorgesehene, nicht näher erläuterte Feststellbremse betätigbar ist.

Der Erfindung liegt die Aufgabe zugrunde, eine solche Feststellbremse gegen ein seitliches Verdrehen des Schwenkgestells einfach, betriebssicher und unanfällig gegen Störungen zu gestalten. Diese Aufgabe wird durch die im Kennzeichenteil des Anspruchs 1 angegebenen Merkmale gelöst.

Weiterbildungen der Erfindung sind in den Unteransprüchen gekennzeichnet.

Die Ausbildung der Bremse als Ziehkeilbremse hat den Vorteil, sehr robust und betriebssicher sowie wenig anfällig gegen Störungen und Verschleiß zu sein. Auch läßt sie sich einfach einstellen und braucht nicht nachgestellt zu werden. Ihr Wirkungsbereich erstreckt sich über den gesamten Schwenkbereich des Grundparallelogramms, und durch die Exzenterbetätigung läßt sich mit geringem Kraftaufwand in jeder Schwenkposition eine ausreichend starke Bremskraft erreichen. Auch erlaubt diese Konstruktion eine Koppelung mit einer Feststellbremse für die Schwenkbewegung des Grundparallelogramms, so daß mit einem Feststellhebel sowohl die Schwenkposition als auch die Drehposition des Grundparallelogramms fixiert werden kann.

Es sei nun eine Ausführungsform der Erfindung anhand der beiliegenden Zeichnungen im einzelnen erläutert. Es zeigen:
- Fig. 1: eine schematische Seitenansicht des verkürzt gezeichneten Grundparallelogramms mit Ansatzparallelogramm und Lagerfuß;
- Fig. 2: einen Teilschnitt durch den Lagerfuß längs der Linie II-II aus Fig. 1 und
- Fig. 3: einen weiteren Teilschnitt längs der Linie III-III aus Fig. 1.

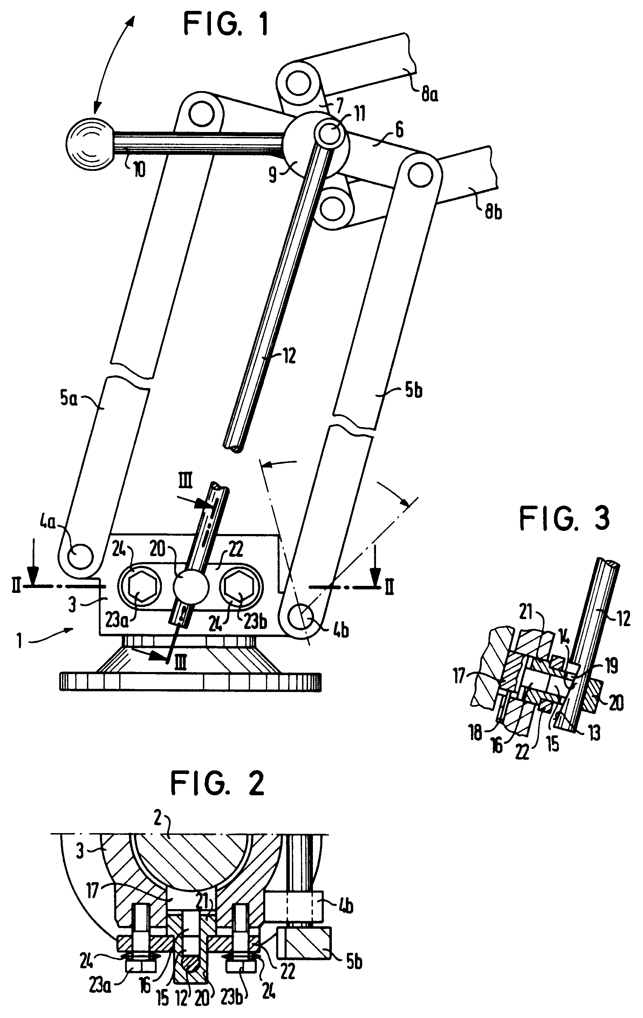

Die schematische Seitenansicht nach Fig. 1 zeigt einen Ständer 1, der am Boden befestigt wird und einen nach oben ragenden Lagerzapfen 2 aufweist, der in Fig. 2 zu erkennen ist und auf dem ein ihm gegenüber verdrehbarer Lagerring 3 sitzt. An diesem Lagerring sind zwei Augen 4a und 4b angeformt, an denen zwei lange Lenker 5a, 5b des Grundparallelogramms angelenkt sind, so daß der Lagerring 3 den unteren kurzen Lenker des Grundparallelogramms bildet, dessen oberer kurzer Lenker mit 6 bezeichnet ist. Fest verbunden mit diesem oberen kurzen Lenker ist ein kurzer Lenker 7 des Ansatzparallelogramms, dessen beide langen Lenker 8a und 8b in der Figur nur angedeutet sind.

Am oberen kurzen Lenker 6 des Grundparallelogramms ist ferner ein Exzenter 9 gelagert, der mit einem Feststellhebel 10 verbunden ist, mit Hilfe dessen er zur Betätigung der Feststellbremse verdreht werden kann, wie der Doppelpfeil andeutet. Exzentrisch zu seinem Drehpunkt trägt der Exzenter 9 ein Bremsstangenlager 11, an dem eine nach unten führende Bremsstange 12 angelenkt ist.

Wie Fig. 3 zeigt, ist das untere Ende der Bremsstange 12 mit einer Keilfläche 13 ausgebildet, die mit einer Gegenkeilfläche 14 eines Bolzens 15 zusammenwirkt. Der Bolzen 15 drückt seinerseits auf einen rückwärtigen Bolzen 16 einer Bremsbacke 17, die in einer Ausnehmung des Lagerrings 3 sitzt und mit Hilfe eines Führungsstiftes 18 gegen Verdrehen gesichert ist. Die Bremsbacke 17 drückt gegen den Lagerzapfen 2, wie die Figuren 2 und 3 erkennen lassen, um den Lagerring 3 mit dem Grundparallelogramm gegen Verdrehen zu sichern, wenn die Ziehkeilbremse angezogen ist.

Das untere Ende der Bremsstange 12 mit der Keilfläche 13 durchsetzt eine Querbohrung 19 einer Buchse 20, die an ihrem inneren Ende mit einem nach außen vorspringenden Umfangsflansch 21 ausgebildet ist, der ebenfalls in der Ausnehmung des Lagerrings 3 sitzt, welche auch die Bremsbacke 17 aufnimmt. Die Buchse 20 durchsetzt mit ihrem dünneren äußeren Teil eine Brücke 22 und liegt mit ihrem Flansch 21 an der Innenseite der Brücke an. Diese ist mit zwei Schrauben 23a, 23b unter Zwischenlage von Tellerfedern 24 an den Lagerring 3 geschraubt, wobei die Tellerfedern 24 die beim Anziehen der Bremsstange durch die Verschiebung der Keilflächen 13 und 14 erzeugte Andruckkraft der Bremsbacke 17 gegen den Lagerzapfen 2 auf einen Wert begrenzen, der einen Verschleiß der Keilflächen und der Bremsflächen ausschließen.

Die Buchse 20 ist in der Ausnehmung der Brücke 22 verdrehbar, um Schwenkbewegungen des Grundparallelogramms folgen zu können, wie aus Fig. 1 ohne weiteres verständlich ist. Aus demselben Grunde ist die Buchse 20 um den rückwärtigen Bolzen 16 der Bremsbacke 17 frei drehbar, wobei der zusätzliche Bolzen 15, der mit seiner Gegenkeilfläche 14 an der Keilfläche 13 der Bremsstange 20 anliegt, sich gegenüber dem drehfest gelagerten rückwärtigen Bolzen 16 der Bremsbacke 17 zusammen mit der Buchse 20 verdrehen kann.

Aus den Figuren ist ersichtlich, daß bei einer Aufwärtsbewegung des Feststellhebels 10 das Bremsstangenlager 11 des Exzenters 9 sich nach unten bewegt und die Bremsstange 12 nach unten schiebt, so daß ihre Keilfläche 13 den Bolzen 14 und damit die Bremsbacke 17 entlastet, so daß der Lagerring 3 mit dem Grundparallelogramm frei um den Lagerzapfen 2 verdreht werden kann, wenn man das in den Figuren nicht gezeigte Waschbecken in ein Gebrauchslager holen oder in eine Ruhelage zurückbringen will. In der jeweiligen Lage wird der Feststellhebel 10 dann nach unten gedrückt, so daß die Bremsstange 12 vom Exzenter 9 nach oben gezogen wird und ihre Keilfläche 13 den Bolzen 15 nach innen schiebt, so daß die Bremsbacke 17 gegen den Lagerzapfen 2 gedrückt wird und den Lagerring 3 somit gegen Verdrehen sichert. Beim Andrücken der Bremsbacke 17 gegen den Lagerzapfen 2 wird die Buchse 20 mit der Brücke 22 gegen die Kraft der Tellerfedern 24 etwas nach außen gedrückt, was sich als Gegenkraft bei der Betätigung des Feststellhebels 10 bemerkbar macht. Beim späteren Lösen der Bremse drücken die Tellerfedern 24 dann die Brücke 22 mit der Buchse 20 wieder in die frühere Lage.

Die Winkelposition des Bremsstangenlagers 11 am Exzenter 9 ist so gewählt, daß der maximale Exzenterhub innerhalb des Hauptarbeitsbereiches des Grundparallelogrammes verfügbar ist, hier also die größte Feststellkraft vorhanden ist. Dies ist in einer gegenüber Fig. 1 stärkeren Neigung des Grundparallelogramms der Fall: In einer praktischen Ausführungsform bei einem Neigungswinkel des Grundparallelogramms von 30° gegen die Senkrechte, welche etwa die Mitte des hauptsächlichen Arbeitsbereiches in der Praxis darstellt. Wegen der Exzentrizität ändert sich nämlich über den Schwenkbereich des Grundparallelogramms der Abstand zwischen dem Bremsstangenlager 11 und der Achse der Buchse 20 und damit die Position der Bremsstange 12 in der Querbohrung 19 der Buchse 20 mit entsprechender Auswirkung auf den verfügbaren Exzenterhub. Dieser ist wie gesagt im mittleren Arbeitsbereich am größten, so daß die Bremsstange 12 am weitesten aus der Buchse 20 gezogen werden kann und somit die größte Keilbreite zur Erzeugung der Bremskraft zur Verfügung steht.

## Patentansprüche

1. Haltevorrichtung für Friseurgeräte mit einem Grundparallelogramm aus je zwei kurzen und langen Lenkern (3,6 bzw. 5a,5b), von denen ein kurzer Lenker (3) um eine lotrechte Achse eines Grundlagers (2,3) drehbar ist, während der andere kurze Lenker (6) mit einem kurzen Lenker (7) eines weiteren, in der gleichen Ebene schwenkbaren Ansatzparallelogramms (7,8a,8b) fest verbunden ist, dessen zweiter kurzer Lenker das in einer Halterung um 360° drehbare Friseurgerät trägt, und mit einem Federgewichtsausgleich sowie einer Arretiervorrichtung (9-17),
**dadurch gekennzeichnet**, daß der untere kurze Lenker des Grundparallelogramms (3,5a,5b,6) einen Drehring (Lagerring 3) aufweist, der auf einem Lagerzapfen (2) eines Ständers (1) sitzt, und daß die Arretiervorrichtung mindestens eine in dem Drehring gelagerte, durch einen Ziehkeil (Keilfläche 13) auf den Zapfen (2) zu bewegbar angeordnete Bremsbacke (17) und einen mit dem Ziehkeil (Keilfläche 13) über eine Bremsstange (12) gekoppelten Exzenter (9) aufweist, der durch einen schwenkbaren Feststellhebel (10) verdrehbar ist.

2. Haltevorrichtung nach Anspruch 1, **dadurch gekennzeichnet**, daß der Ziehkeil (Keilfläche 13) an einem mit einer Gegenkeilfläche (14) gleichen Keilwinkels versehenen und gegenüber der Bremsbacke (17) um deren Verschiebungsachse verdrehbar angeordnetenen Bolzen (15) angreift.

3. Haltevorrichtung nach Anspruch 1, **dadurch gekennzeichnet**, daß der Exzenterwinkel derart gewählt ist, daß der maximale Exzenterhub im Hauptarbeitsbereich des Grundparllelogramms (3,5a,5b,6) erreicht wird.

4. Haltevorrichtung nach Anspruch 1, **dadurch gekennzeichnet**, daß die Bremsstange (12) in einer den Bolzen (15) enthaltenden Buchse (20) geführt ist, die mittels einer Brücke (22) gehalten ist, und daß die Brücke federnd (Tellerfedern 24) am Drehring (Lagerring 3) gelagert ist.

5. Haltevorrichtung nach Anspruch 4, **dadurch gekennzeichnet**, daß die Buchse (20) in der Brücke (22) verdrehbar ist und daß die Brücke unter Einfügung von Tellerfedern (24) mit dem Drehring (Lagerring 3) verschraubt ist.

6. Haltevorrichtung nach Anspruch 1, **dadurch gekennzeichnet,** daß mit dem Feststellhebel (10) außerdem eine Bewegungen des Grundparallelogramms (3,5a,5b,6) und des Ansatzparallelogramms (7,8a,8b) blockierende Feststellbremse gekoppelt ist.

## Claims

1. Supporting device for hairdressing apparatus with a base parallelogram linkage comprising two short arms and two long arms (3, 6 and 5a, 5b, respectively), of which one short arm (3) is rotatable about a vertical axis of a base bearing (2, 3) whilst the other short arm (6) is fixedly connected to a short arm (7) of a further auxiliary parallelogram linkage (7, 8a, 8b), which is pivotable in the same plane and whose second short arm carries the hairdressing apparatus rotatable through 360° in a mounting, and with a spring weight compensator and a locking device (9-17), characterised in that the lower short arm of the base parallelogram linkage (3, 5a, 5b, 6) has a rotary ring (bearing ring 3) which rests on a bearing peg (2) of a stand (1) and that the locking device has at least one brake shoe (17), which is mounted in the rotary ring and is arranged to be movable by a movable wedge (wedge surface 13) towards the peg (2), and an eccentric (9), which is coupled to the movable wedge (wedge surface 13) by means of a brake rod (12) and which is rotatable by a pivotable stop lever (10).

2. Supporting device as claimed in Claim 1, characterised in that the movable wedge (wedge surface 13) engages a peg (15) which is provided with a complementary wedge surface (14) with the same wedge angle and is arranged to be rotatable with respect to the brake shoe (17) about its axis of displacement.

3. Supporting device as claimed in Claim 1, characterised in that the eccentric angle is so selected that the maximum eccentric movement is achieved in the main working range of the base parallelogram linkage (3, 5a, 5b, 6).

4. Supporting device as claimed in Claim 1, characterised in that the brake rod (12) is guided in a bush (20) which contains the peg (15) and which is mounted by means of a bridge (22) and that the bridge is resiliently (plate springs 24) mounted on the rotary ring (bearing ring 3).

5. Supporting device as claimed in Claim 4, characterised in that the bush (20) is rotatable in the bridge (2) and that the bridge is screwed to the rotary ring (bearing ring 3) with the interposition of plate springs (24).

6. Supporting device as claimed in Claim 1, characterised in that additionally coupled to the stop lever (10) is a locking brake which blocks movements of the base parallelogram linkage (3, 5a, 5b, 6) and of the auxiliary parallelogram linkage (7, 8a, 8b).

## Revendications

1. Support pour un appareil de coiffeur, comportant un parallélogramme articulé principal constitué de deux bras courts et de deux bras longs (3,6 et 5a,5b), parmi lesquels un bras court (3) est monté à rotation autour d'un axe vertical d'une embase (2,3), tandis que l'autre bras court (6) est relié d'une manière fixe avec un autre bras court (7) d'un autre parallélogramme articulé auxiliaire (7,8a,8b) pouvant pivoter dans le même plan, dont le deuxième bras court porte l'appareil de coiffeur monté à rotation sur un angle de 360° dans une monture, un dispositif d'équilibrage à ressort et un dispositif d'arrêt (9-17), caractérisé en ce que le bras court inférieur du parallélogramme articulé principal (3,5a,5b,6) comporte un anneau rotatif (anneau de base 3) qui prend appui sur un pivot (2) d'un socle (1) et en ce que le dispositif d'arrêt comporte au moins une mâchoire de frein (17) logée dans l'anneau rotatif et qui peut être pressée contre le pivot (2) par l'intermédiaire d'un coin de traction (surface de coin (13)) et d'un excentrique (9) qui est accouplé avec le coin de traction (surface de coin (13)) par l'intermédiaire d'une tige de frein (12) et qui peut être tourné au moyen d'un levier de blocage pivotant (10).

2. Support suivant la revendication 1 caractérisé en ce que le coin de traction (surface de coin (13)) est appliqué contre un axe (15) présentant une surface de coin opposée (14), inclinée suivant le même angle de coin et disposé de manière à pouvoir tourner autour de l'axe de poussée contre la mâchoire de frein (17).

3. Support suivant la revendication 1 caractérisé en ce que l'angle de l'excentrique est choisi de telle façon que la course maximale de l'excentrique soit obtenue dans la zone de travail principale du parallélogramme articulé principal (3,5a,5b,6).

4. Support suivant la revendication 1 caractérisé en ce que la tige de frein (12) est guidée dans une douille (20) contenant l'axe (15), cette douille étant maintenue par un pont (22), et en ce que ce pont est monté élastiquement (ressorts à rondelles Belleville 24) sur l'anneau rotatif (anneau de base (3)).

5. Support suivant la revendication 4 caractérisé en ce que la douille (20) est montée à rotation dans le pont (22) et ce pont est vissé sur l'anneau rotatif (anneau de base (3)) en étant sollicité par les ressorts du type rondelles Belleville (24).

6. Support suivant la revendication 1 caractérisé en ce qu'un frein de blocage des mouvements du parallélogramme articulé principal (3,5a,5b,6) et du parallélogramme articulé auxiliaire (7,8a,8b) est accouplé avec le levier de blocage (10).
